# EUROPEAN PATENT APPLICATION

(11) **EP 4 403 281 A1**
(43) Date of publication of application: **24.07.2024**
(21) Application number: 22886501.0
(22) Date of filing: 14.09.2022
(51) Int. Cl.: B22F 9/04, B01J 23/745, B01J 35/02, B22F 1/00

(54) **PRODUCTION METHOD FOR FINE METAL PARTICLES**

(30) Priority: 29.10.2021 JP 2021177811
(71) Applicant: Mitsubishi Power, Ltd., Tokyo 100-8332 (JP)
(72) Inventor: KIYOSAWA, Masashi, Yokohama-shi, Kanagawa 220-8401 (JP); NOJIMA, Shigeru, Tokyo 100-8332 (JP); TANAKA, Atsushi, Tokyo 100-8332 (JP); YASUTAKE, Toshinobu, Tokyo 100-8332 (JP); KUBOTA, Takafumi, Tokyo 100-8332 (JP)
(74) Representative: Studio Torta S.p.A.
(86) International application number: PCT/JP2022/034370
(87) International publication number: WO 2023/074167

(57) **Abstract**

A production method for fine metal particles includes a step of preparing metal particles and a step of supplying the metal particles with a feed gas containing a hydrocarbon, wherein the contact between the feed gas and the metal particles is carried out at a temperature of 600°C to 900°C.

## Description

### Technical Field

The present disclosure relates to a production method for fine metal particles.

This application claims priority based on Japanese Patent Application Number 2021-177811 filed to JPO on October 29, 2021, the contents of which are incorporated herein by reference.

### Background Art

Techniques for micronizing a metal include pulverization of a solid metal and an atomization method in which a molten metal is sprayed and cooled (e.g., see Patent Document 1).

### Citation List

### Patent Literature

Patent Document 1: JP 2018-141223 A (paragraph 0031)

### Summary of Invention

### Technical Problem

However, most techniques in the related art are micronization techniques for micronizing a metal to a particle size on the order of micrometer, and are not suitable for micronizing a metal to a particle size on the order of submicron.

In view of the above-described circumstances, an object of at least one embodiment of the present disclosure is to provide a production method for fine metal particles by which a metal can be micronized to a particle size on the order of submicron.

### Solution to Problem

To achieve the above-described object, a production method for fine metal particles according to the present disclosure includes a step of preparing metal particles and a step of supplying a feed gas containing a hydrocarbon to the metal particles, and in the production method, the contact between the feed gas and the metal particles is carried out at a temperature of 600°C to 900°C.

### Advantageous Effects of Invention

According to the production method for fine metal particles of the present disclosure, the metal particles function as a catalyst for a reaction of directly decomposing hydrocarbon into carbon and hydrogen. In the course of this catalysis, grain boundaries are generated in the metal particles due to hydrogen attack by the generated hydrogen, and microparticles move from the metal particles by migration starting from the grain boundaries and react with the generated carbon to form metal carbides. Conversion to metal carbides proceeds in association with the hydrogen attack, and the metal is divided into microparticles having a particle size on the order of submicron. In this way, the metal can be micronized to a particle size on the order of submicron.

### Brief Description of Drawings

FIG. 1 is a schematic diagram illustrating a configuration of a device for performing a production method for fine metal particles according to an embodiment of the present disclosure.
FIG. 2 is a schematic diagram illustrating a configuration of an experimental apparatus for verifying an effect of the production method for fine metal particles according to the embodiment of the present disclosure.
FIG. 3 is a graph showing experimental results of Example 1.
FIG. 4 is a graph showing experimental results of Comparative Example 1.
FIG. 5 is a graph showing experimental results of Comparative Example 2.
FIG. 6A shows a photograph of a catalyst (metal particles) before the start of an experiment of Example 1.
FIG. 6B shows a photograph of the catalyst (metal particles) after the completion of the experiment of Example 1.
FIG. 7 is a diagram for explaining a catalysis mechanism in Example 1.
FIG. 8 shows photographs of particle surfaces of the catalyst in a first stage of the catalysis mechanism in Example 1.
FIG. 9 shows photographs of particle surfaces of the catalyst in a second stage of the catalysis mechanism in Example 1.
FIG. 10 shows photographs of particle surfaces of the catalyst in a fourth stage of the catalysis mechanism in Example 1.
FIG. 11A is an X-ray diffraction pattern of particles of the catalyst in the first stage of the catalysis mechanism in Example 1.
FIG. 11B is an X-ray diffraction pattern of particles of the catalyst in the fourth stage of the catalysis mechanism in Example 1.
FIG. 12 is a graph showing experimental results of Examples 2 to 4.
FIG. 13 shows a photograph of a surface image of iron powder taken by a scanning electron microscope before the start of an experiment of Example 3.
FIG. 14 shows photographs of surface images of the iron powder taken by a scanning electron microscope 5 hours after the start of the experiment of Example 3.
FIG. 15 shows photographs of surface images of the iron powder taken by a scanning electron microscope 10 hours after the start of the experiment of Example 3.
FIG. 16 shows photographs of surface images of the iron powder taken by a scanning electron microscope 30 hours after the start of the experiment of Example 3.
FIG. 17 is a graph showing a particle size distribution of the iron powder before the start of the experiment, 5 hours after the start of the experiment, 10 hours after the start of the experiment, and 30 hours after the start of the experiment of Example 3.
FIG. 18 is a graph showing a relationship between reaction temperature and peak value of methane conversion rate in Examples 2 to 7.
FIG. 19 is a metallographic phase diagram of a carbon steel in an equilibrium state.
FIG. 20 is a graph showing a relationship between partial pressure of methane and peak value of methane conversion rate in Examples 8 to 11.
FIG. 21 is a graph showing experimental results of Example 12.
FIG. 22 is a graph showing experimental results of Example 13.
FIG. 23 is a graph showing experimental results of Example 14.
FIG. 24 is a graph showing experimental results of Example 15.
FIG. 25 shows photographs of surface images of nickel particles taken by a scanning electron microscope before the start of an experiment of Example 16.
FIG. 26 shows photographs of surface images of the nickel particles taken by a scanning electron microscope 50 hours after the start of the experiment of Example 16.
FIG. 27 is a graph showing experimental results of Example 17 and Comparative Example 3.
FIG. 28 is a graph showing experimental results of Examples 18 and 19 and Comparative Example 4.

### Description of Embodiments

Hereinafter, a production method for fine metal particles according to an embodiment of the present disclosure will be described with reference to the drawings. The embodiment to be described below illustrates one aspect of the present disclosure, does not limit the present disclosure, and can be arbitrarily changed within the scope of the technical idea of the present disclosure.

### Configuration of Device for Performing Production Method for Fine Metal Particles According to Embodiment of Present Disclosure

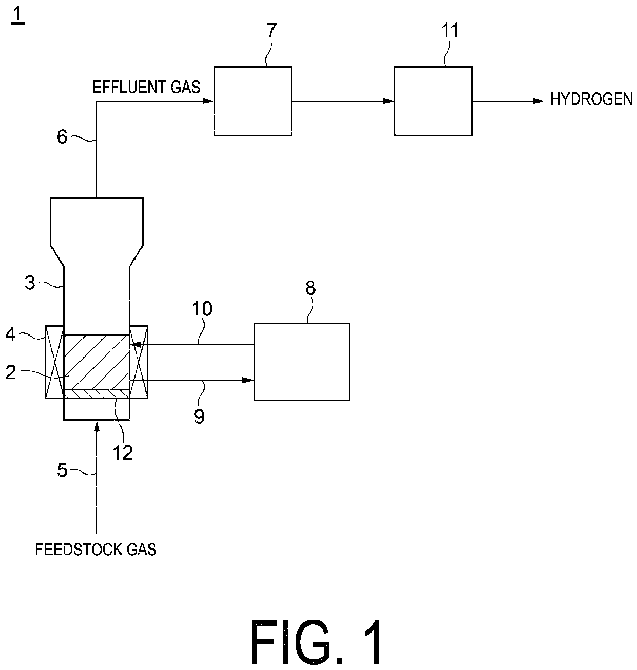

As illustrated in FIG. 1, a device 1 for performing a production method for fine metal particles according to an embodiment of the present disclosure includes a reactor 3 in which metal particles 2 to be micronized are accommodated. The reactor 3 is provided with a heater 4 (for example, a jacket through which steam flows) for increasing the temperature inside the reactor 3, in particular, the temperature of the metal particles 2. The reactor 3 is connected to a feedstock supply line 5 for supplying a feed gas containing a hydrocarbon to the reactor 3 and an effluent gas flow line 6 through which an effluent gas flowing out of the reactor 3 flows.

The effluent gas flow line 6 may be provided with a solid-gas separator 7 such as a bag filter or a cyclone. As will be described below, the effluent gas contains hydrogen, and a hydrogen refiner 11 for refining hydrogen in the effluent gas, that is, for increasing a hydrogen concentration may be provided at the effluent gas flow line 6. The configuration of the hydrogen refiner 11 is not particularly limited and, for example, a pressure swing adsorption (PSA) device can be used. By using the device 1, hydrogen as well as fine metal particles can be produced by a method to be described below. By providing the device 1 with the solid-gas separator 7 and the hydrogen refiner 11, the purity of hydrogen can be increased and the mixing of solid impurities can be prevented.

As will be described below, a reaction by the catalysis of the metal particles 2 produces hydrogen and carbon from hydrocarbon. Most of the carbon adheres to the metal particles 2, and thus fine metal particles to which the carbon adheres are produced. For this reason, the device 1 may be provided with a carbon remover 8 for removing the carbon from the fine metal particles. The carbon remover 8 may be configured to communicate with the reactor 3 via a supply line 9 for supplying the metal particles 2 and the fine metal particles from the reactor 3 to the carbon remover 8 and a return line 10 for returning the metal particles 2 and the fine metal particles from the carbon remover 8 to the reactor 3. The configuration of the carbon remover 8 is not particularly limited and, for example, a rotary pipe (kiln) that can rub the metal particles 2 and the fine metal particles against each other by stirring the metal particles 2 and the fine metal particles may be used. As another configuration of the carbon remover 8, a configuration in which carbon is converted into methane, carbon monoxide, or carbon dioxide by hydrogen, water vapor, and oxygen so as to remove the carbon from the metal particles 2 and the fine metal particles may be used. In the case where carbon may remain adhering to the fine metal particles, the carbon remover 8 need not be provided at the device 1.

In the reactor 3, each particle of the metal particles 2 may be in a stationary state, or may be in a fluidized bed state in which particles are suspended and floated in the feed gas by injecting the feed gas upward. In the case where the metal particles 2 form a fluidized bed, the metal particles 2 and the fine metal particles rub against each other so that the carbon adhering to the metal particles 2 and the fine metal particles is physically removed from these particles. Thus, a fluidized bed forming device for forming a fluidized bed of the metal particles 2 (a plate 12 that supports the catalyst in the reactor 3 and has a plurality of holes through which the feed gas passes) may be used as the carbon remover 8.

The metal forming the metal particles 2 is iron, nickel, or cobalt, or an alloy of at least two thereof. The particle size of the metal particles 2 is preferably in a range of 2 µm to 3 mm. The feed gas may contain only hydrogen water, or may contain inert gas (nitrogen or rare gas) in addition to hydrocarbon.

### Production Method for Fine Metal Particles According to Embodiment of Present Disclosure

Next, the production method for fine metal particles according to the embodiment of the present disclosure will be described. The metal particles 2 to be micronized are accommodated in the reactor 3. Subsequently, the feed gas is supplied into the reactor 3 through the feedstock supply line 5 so as to be brought into contact with the metal particles 2 in the reactor 3. At this time, hydrocarbon in the feed gas is directly decomposed into hydrogen and carbon by the catalysis of the metal particles 2. For example, when methane is used as the hydrocarbon in this decomposition reaction (also referred to as "direct decomposition reaction"), a reaction represented by the following reaction formula (1) occurs in the reactor 3.

CH₄ → 2H₂ + C... (1)

To accelerate the decomposition reaction, the temperature of the metal particles 2 is preferably maintained in a range of 600°C to 900°C by the heater 4. The technical significance of this temperature range will be described below.

While a specific mechanism of the catalysis of the metal particles 2 in the decomposition reaction will be described below, the metal forming the metal particles is micronized in the course of the catalysis of the decomposition reaction so as to produce fine metal particles. The carbon produced by the decomposition reaction adheres to the metal particles 2 and the fine metal particles, and the hydrogen produced by the decomposition reaction flows out of the reactor 3 together with unreacted hydrocarbon as an effluent gas and the effluent gas flows through the effluent gas flow line 6. The hydrogen is recovered by recovering the effluent gas flowing through the effluent gas flow line 6.

After the supply of the feed gas to the reactor 3 is stopped, the metal particles 2 and the fine metal particles can be recovered from the reactor 3. Since not all the metal particles 2 become fine metal particles having a desired particle size, if necessary, the recovered metal particles 2 and the recovered fine metal particles may be classified according to particle size by a known method. In addition, if necessary, the metal particles 2 and the fine metal particles may be supplied from the reactor 3 to the carbon remover 8 via the supply line 9 so as to remove the carbon adhering to the metal particles 2 and the fine metal particles. In the case where the metal is further micronized after the removal of the carbon, the metal particles 2 and the fine metal particles are returned from the carbon remover 8 to the reactor 3 via the return line 10 so that the above-described operation can be performed again.

### Examples

### Example 1

The inventors of the present disclosure found that the activity of the reaction formula (1) can be maintained for a long time by using the metal particles 2 as a catalyst and fine metal particles can be produced by micronizing the metal particles 2 in the course of this reaction. As will be described below, the above-described effects are demonstrated by comparing Example 1 in which the metal particles 2 are used as a catalyst with Comparative Examples 1 and 2 in which a supported catalyst is used. The metal particles used in Example 1 are iron powder (particle size of 43 µm or less) available from The Nilaco Corporation. A catalyst used in Comparative Example 1 is a supported catalyst in which iron and molybdenum as active components are supported on a carrier made of MgO. The iron content is 2.7 mass%, the molybdenum content is 0.3 mass% and the particle size of the carrier is about 1 mm. A catalyst used in Comparative Example 2 is obtained by changing the iron content of the catalyst of Comparative Example 1 to 16 mass%.

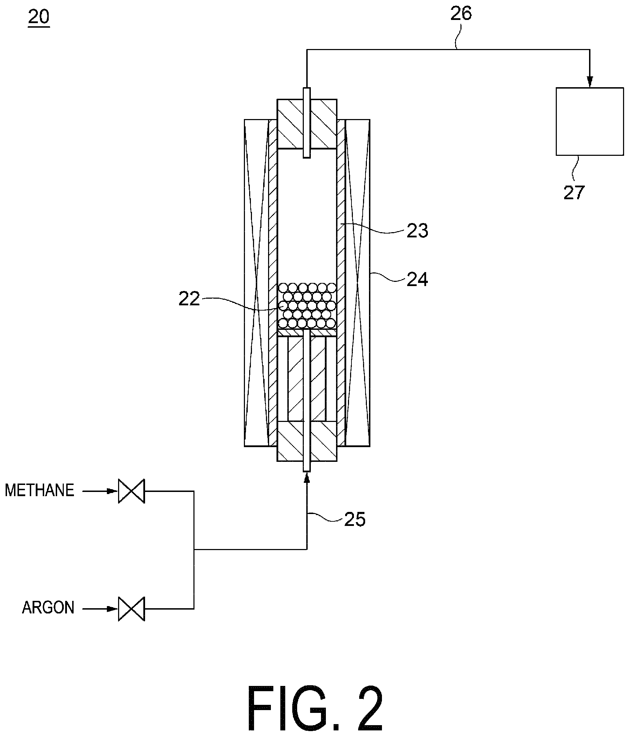

FIG. 2 illustrates a configuration of an experimental apparatus for comparing Example 1 with Comparative Examples 1 and 2. An experimental apparatus 20 includes a reactor 23 which is made of quartz, has an inside diameter of 16 mm, and accommodates a catalyst 22 of each of Example 1 and Comparative Examples 1 and 2. The reactor 23 can be heated by an electric furnace 24. The reactor 23 is connected to a feedstock supply line 25 for supplying each of methane and argon and an effluent gas flow line 26 through which an effluent gas containing a hydrogen generated by a direct decomposition reaction of the methane flows after flowing out from the reactor 23. That is, in each of Example 1 and Comparative Examples 1 and 2, the feed gas supplied to the reactor 23 is a mixed gas of methane and argon or a gas of only methane. The effluent gas flow line 26 is connected to a gas chromatography 27 for measuring the composition of the effluent gas. The respective experimental conditions for Example 1 and Comparative Examples 1 and 2 are summarized in Table 1 below.

**[Table 1]**

| Example/Comparative Example | Example 1 | Comparative Example 1 | Comparative Example 2 |
|---|---|---|---|
| Reaction temperature (°C) | 900 | 900 | 800 |
| Amount of catalyst (cc) | 2 | 19 | 10 |
| Height of catalyst layer (cm) | 1.0 | 5 | 5 |
| Flow rate of feed gas (cc/min) | 100 | 100 | 1000 |
| Space velocity (h⁻¹) | 6000 | 6000 | 6000 |
| Composition of feed gas | Methane: 20 vol%, Argon: 80 vol% | | |

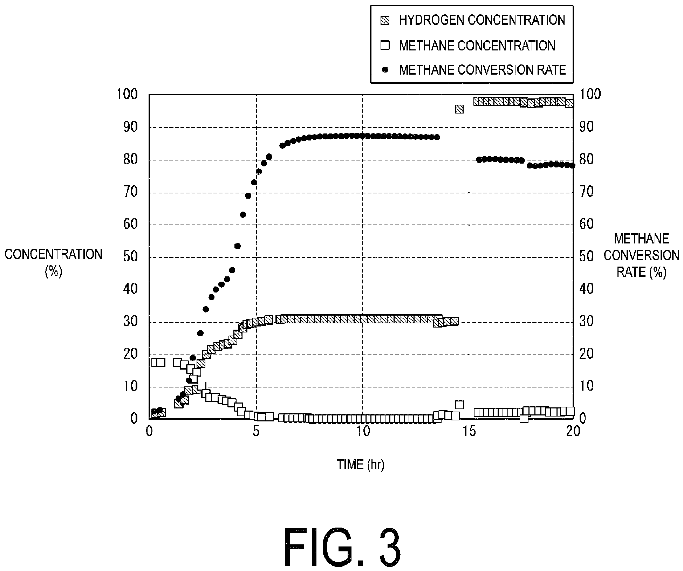

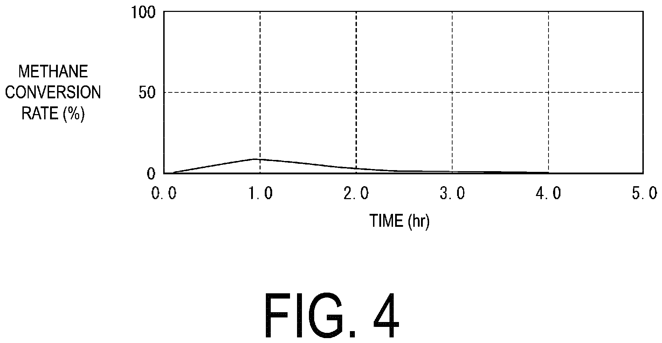

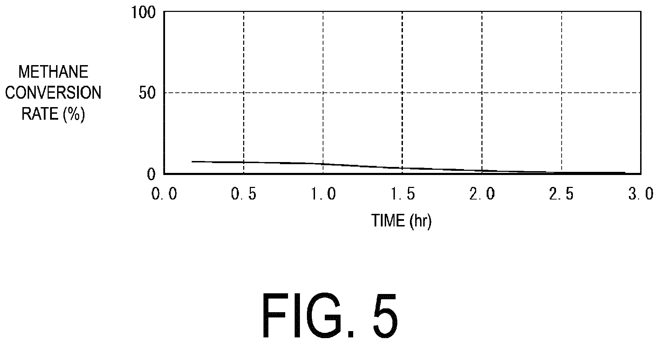

The experimental results of Example 1 and Comparative Examples 1 and 2 are shown in FIGS. 3 to 5, respectively. FIG. 3 shows the change over time of the concentrations of methane and hydrogen in an effluent gas and the change over time of a methane conversion rate. FIGS. 4 and 5 each show the change over time of a methane conversion rate. The methane conversion rate is defined by the following equation (2). In Comparative Example 1, the methane conversion rate rapidly increased immediately after the start of the experiment, and then decreased from around 1 hour after the start of the experiment. In Comparative Example 2, the methane conversion rate was substantially constant until 1 hour after the start of the experiment, and then the methane conversion rate decreased. On the other hand, in Example 1, although it took about 7 hours for the methane conversion rate to increase to the maximum value, after that, the methane conversion rate was substantially constant until 14 hours after the start of the experiment. In Example 1, 14 hours after the start of the experiment, the supply of argon was stopped, the supply amount of methane was increased, and the flow rate of the feed gas was maintained at 100 cc/min such that the composition of the feed gas was changed to 100% methane. Then, the experiment was terminated at a timing of 20 hours after the start of the experiment. The methane conversion rate was also substantially constant from 14 hours to 20 hours after the start of the experiment. Conversion rate = (1 - (amount of unreacted methane/amount of methane in feedstock)) × 100...(2)

From this result, it was found that the activity of the reaction represented by the reaction formula (1) was maintained for a much longer time in Example 1 than in Comparative Examples 1 and 2. In addition, under the conditions of Example 1, the methane conversion rate was close to 90%, that is, most of the supplied methane was decomposed. The same result was obtained even when the composition of the feed gas (the content of methane in the feed gas) was changed.

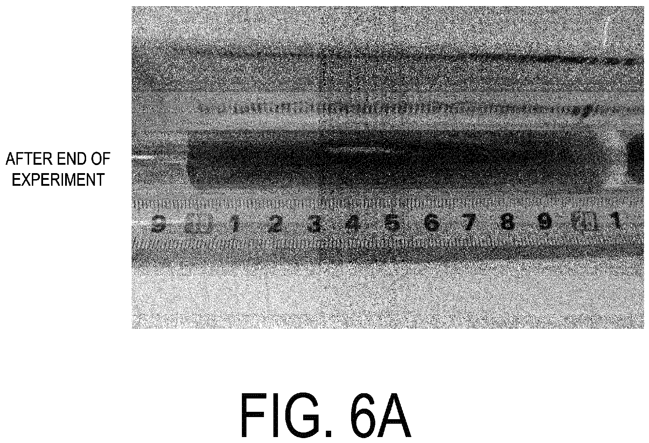

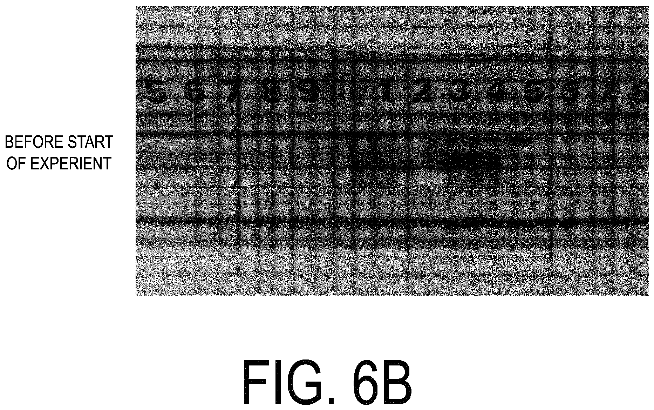

FIG. 6A and FIG. 6B show the photographs of the catalyst before the start of the experiment and after the end of the experiment in Example 1, respectively. While the height of a catalyst layer before the start of the experiment was 1.0 cm, the height of the catalyst layer after the end of the experiment increased to about 10.5 cm. This is because carbon as a product of the reaction represented by the reaction formula (1) adhered to the catalyst to increase the volume of the catalyst, and it was confirmed that the carbon was also produced in an amount corresponding to the amount of hydrogen produced.

From these experimental results, the inventors of the present disclosure consider that the catalyst in Example 1 functions by a mechanism different from the mechanism of the conventional supported catalyst used in Comparative Examples 1 and 2. That is, it is considered that when a conventional supported catalyst is used, the catalysis starts working immediately after the start of the experiment, but produced carbon covers active sites of the catalyst so that methane cannot reach the active sites, resulting in a decrease in the activity at an early stage. On the other hand, when a catalyst made of iron powder as in Example 1 is used, it is considered that even when produced carbon adheres to the surface of the iron powder as in Comparative Examples 1 and 2, the activity is maintained because new active sites are developed. Hereinafter, the mechanism of the catalysis in Example 1 will be described in detail.

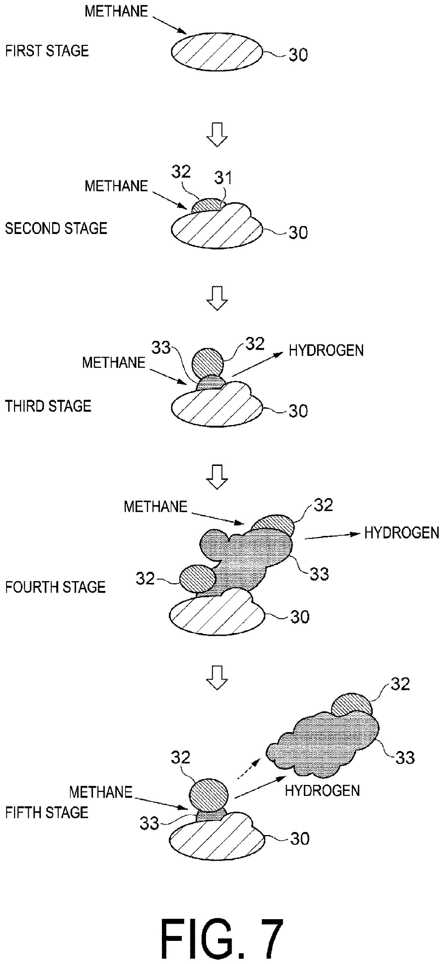

As illustrated in FIG. 7, in the first stage in which methane starts to reach a catalyst particle 30, the activity of the catalyst is very low, and thus the reaction rate of the reaction represented by the reaction formula (1) is very low. Then, this reaction gradually begins to occur to produce hydrogen and carbon. In the subsequent second stage, a grain boundary 31 is generated at the catalyst particle 30 by hydrogen attack. Starting from the grain boundary 31, microparticles of iron move from the catalyst particle 30 by migration and react with the produced carbon to form an iron carbide 32. The iron carbide 32 serves as an active site of the catalyst. As the number of such active sites at the catalyst particle 30 gradually increases, the activity of the reaction represented by the reaction formula (1) increases.

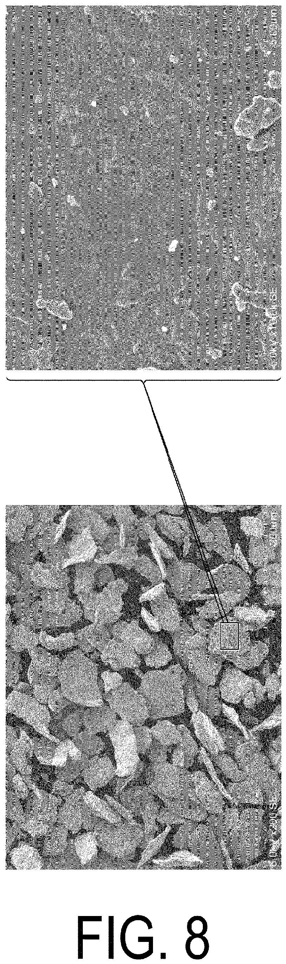

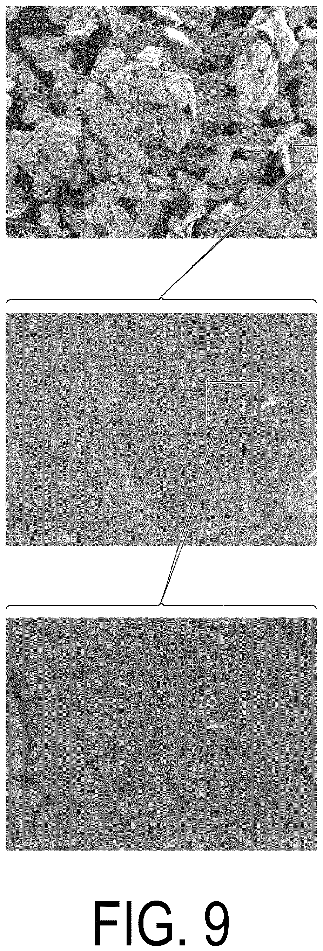

To verify the above descriptions from the first stage to the second stage, photographs of the surfaces of the catalyst particle 30 taken in the first stage and the second stages are shown in FIGS. 8 and 9, respectively. In the first stage, as shown in FIG. 8, no microparticle of iron is not confirmed at a particle of the catalyst, and a smooth surface peculiar to austenite is observed. On the other hand, in the second stage, as shown in FIG. 9, a stripe pattern on the order of submicron can be confirmed at a particle of the catalyst. From this, it is considered that conversion of the iron into iron carbides proceeds in association with the hydrogen attack, the iron is divided into iron microparticles on the order of submicron, and precursors of active sites are formed.

As illustrated in FIG. 7, in the third stage following the second stage, methane is adsorbed to the iron carbide 32 which is an active site, the methane is decomposed into hydrogen and carbon, and carbon 33 is deposited between the iron carbide 32 and the catalyst particle 30. In the subsequent fourth stage, when the methane is adsorbed to the iron carbide 32 and the methane is decomposed into hydrogen and carbon, the carbon is deposited between the iron carbide 32 and the already deposited carbon. In this way, the carbon 33 grows so as to extend from the catalyst particle 30. Since the iron carbide 32 is present at an upper portion of the growing carbon (at an end far from the catalyst particle 30), the carbon 33 has almost no effect of inhibiting methane from reaching the iron carbide 32.

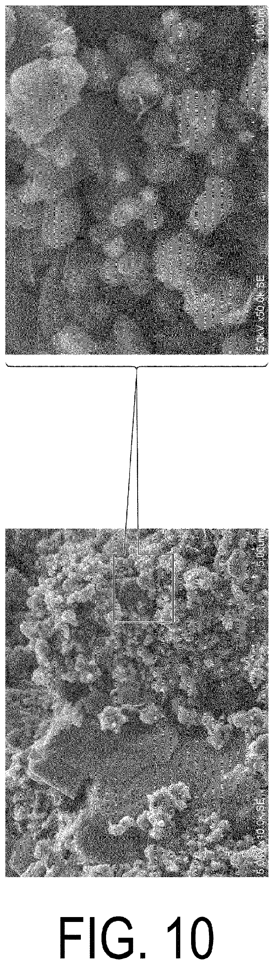

To verify the above descriptions from the third stage to the fourth stage, photographs of the surface of the catalyst particle 30 taken in the fourth stage are shown in FIG. 10. In the fourth stage, a state in which carbon is deposited on the surfaces of the iron microparticles on the order of submicron to form a core-shell structure is confirmed. The iron microparticles on the order of submicron are considered to be iron carbides (cementite (Fe₃C)/martensite (Fe_{1.88}C_{0.12})) as active sites. It is considered that the carbon present around the iron carbides has a function as a carrier of an active site and contributes to stabilization of active sites and enhancement of performance.

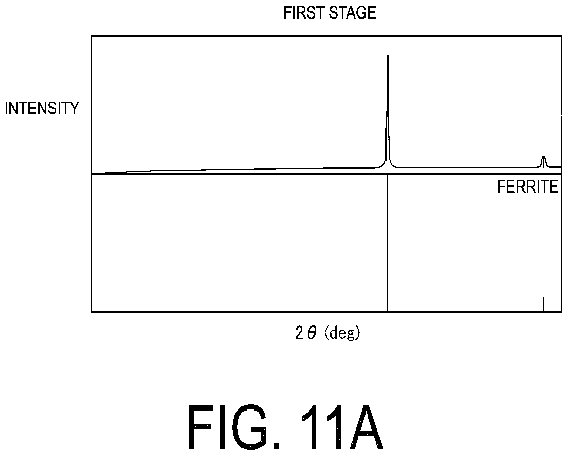

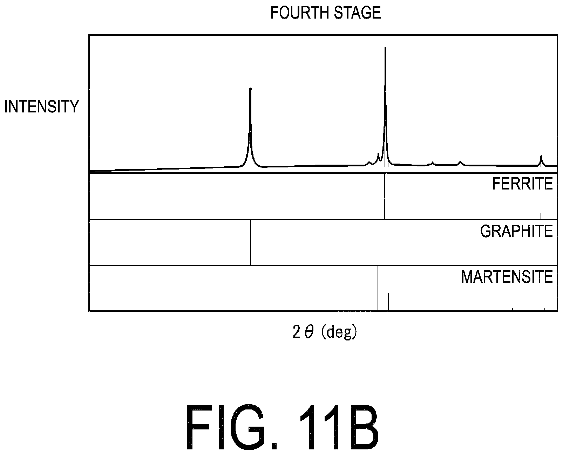

An X-ray diffraction pattern of the catalyst particle 30 in a state of the first stage and an X-ray diffraction pattern of the catalyst particle 30 in a state of the fourth stage are shown in FIG. 11A and FIG. 11B, respectively. While only peaks of α-Fe (ferrite) of the single iron forming the catalyst particle 30 are observed in the state of the first stage, in the state of the fourth stage, not only peaks of α-Fe (ferrite), but also respective peaks of graphite and martensite (Fe_{1.88}C_{0.12}) can be confirmed. This result also confirms the presence of iron carbides and supports that active sites are iron microparticles (iron carbides) on the order of submicron. It is considered that the reason why the peaks of martensite are confirmed and no peak of cementite is confirmed in the X-ray diffraction pattern in the state of the fourth stage is due to an effect of rapidly cooling the catalyst particle 30 to room temperature when the X-ray diffraction pattern was taken.

As illustrated in FIG. 7, although the fifth stage does not necessarily occur after the fourth stage, in the fifth stage, the carbon 33 is peeled off from the catalyst particle 30 naturally or by the action of a physical force. Then, the iron carbide 32 as an active site disappears from the catalyst particle 30, but since the iron carbide 32 continuously appears from the catalyst particle 30, active sites do not rapidly decrease.

Such a mechanism from the first stage to the fourth stage (including the fifth stage in some cases) can sufficiently explain the characteristics of the experimental result of Example 1, that is, a fact that the activity of the reaction slowly increased until 5 hours after the start of the experiment and, thereafter, the activity of the reaction was stable for a long time. It is confirmed that, by this reaction, the iron powder having a particle size of 43 µm or less was micronized to produce fine iron particles on the order of submicron.

### Examples 2 to 4

Next, experiments of Examples 2 to 4 using different reaction temperatures were performed by using the experimental apparatus 20 illustrated in FIG. 2. The respective experimental conditions for Examples 2 to 4 are summarized in Table 2 below. The catalyst used in Examples 2 to 4 is the same as the catalyst used in Example 1.

**[Table 2]**

| Example | 2 | 3 | 4 |
|---|---|---|---|
| Reaction temperature (°C) | 900 | 800 | 750 |
| Amount of catalyst (cc) | 0.2 | 0.2 | 0.2 |
| Height of catalyst layer (cm) | 0.1 | 0.1 | 0.1 |
| Flow rate of feed gas (cc/min) | 20 | 20 | 20 |
| Space velocity (h⁻¹) | 6000 | 6000 | 6000 |
| Composition of feed gas | Methane: 100 vol% | | |

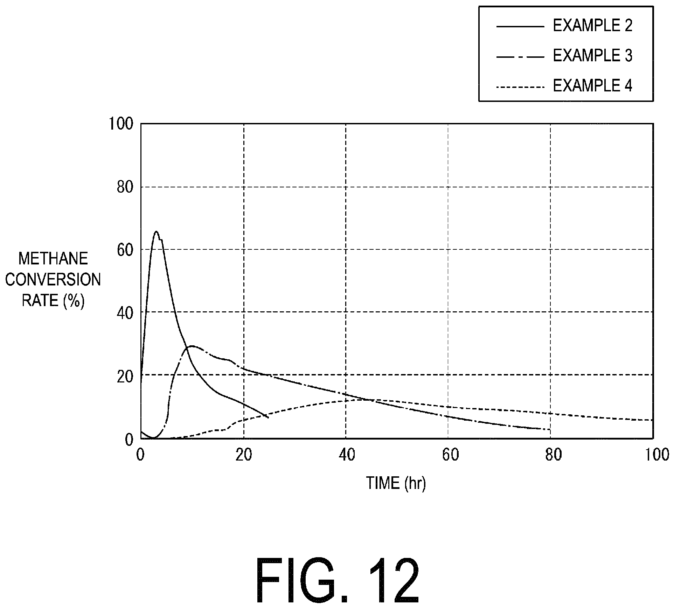

The experimental results of Examples 2 to 4 are shown in FIG. 12. FIG. 12 shows the changes over time of methane conversion rates. According to a magnitude relationship between the methane conversion rates of Examples 2 to 4, it can be said that the higher the reaction temperature is, the higher the peak value of the methane conversion rate is and the shorter the time until the peak value is reached is.

In each of Examples 2 and 3, the methane conversion rate reached the maximum values within 20 hours after the start of the experiment and then started to decrease. In Example 4, the methane conversion rate increased very gradually until 40 hours after the start of the experiment and then decreased very gradually. In Example 4, it is considered that the maximum value of the methane conversion rate was low because the action of the catalysis, particularly, the development of the mechanism up to the second stage described above was delayed due to the low reaction temperature.

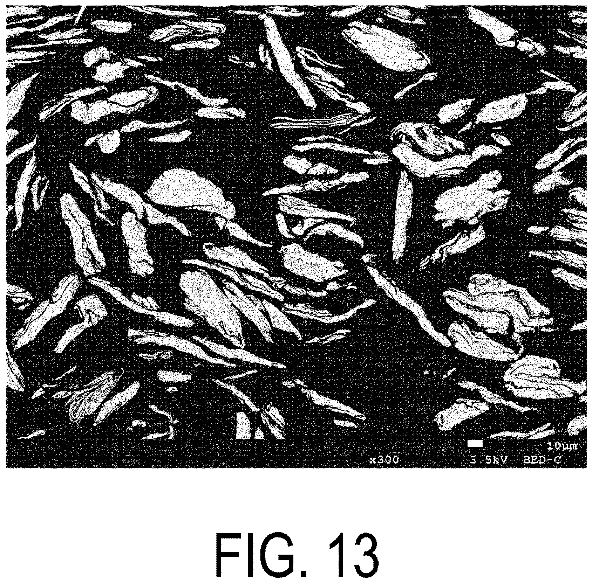

As described above, it was found that the activity of the reaction represented by the reaction formula (1) was maintained for a considerably long time in Examples 2 to 4 as in Example 1. From this, it is considered that in a reaction temperature range of 750°C to 900°C, the iron powder which is the metal particles used as the catalyst was micronized to produce fine iron particles on the order of submicron as in Example 1. Then, for Example 3, to evaluate a behavior of producing fine iron particles on the order of submicron, a surface image of the iron powder was captured by a scanning electron microscope (SEM) before the start of the experiment, 5 hours after the start of the experiment (corresponding to the second stage of the reaction), 10 hours after the start of the experiment (corresponding to the third stage of the reaction), and 30 hours after the start of the experiment (corresponding to the fourth stage of the reaction). The photographs thereof are shown in FIGS. 13 to 16.

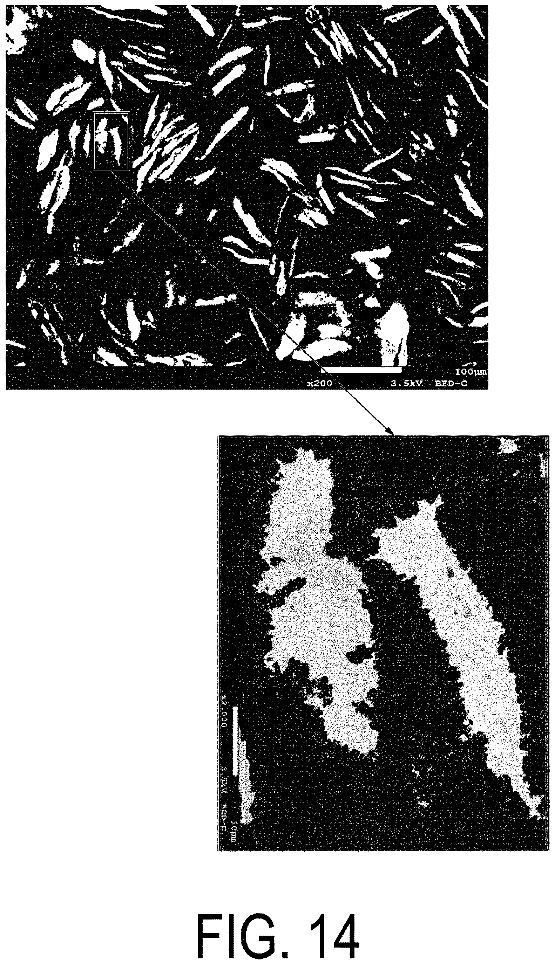

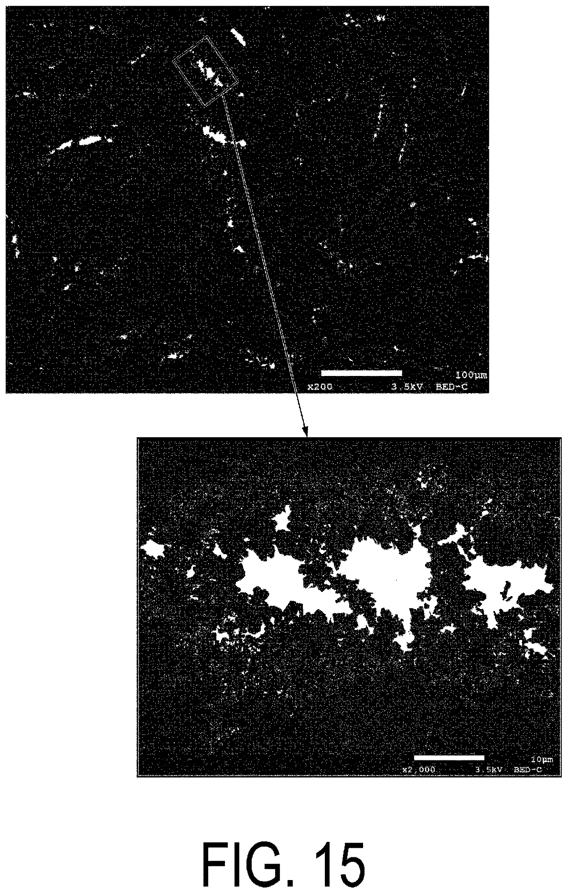

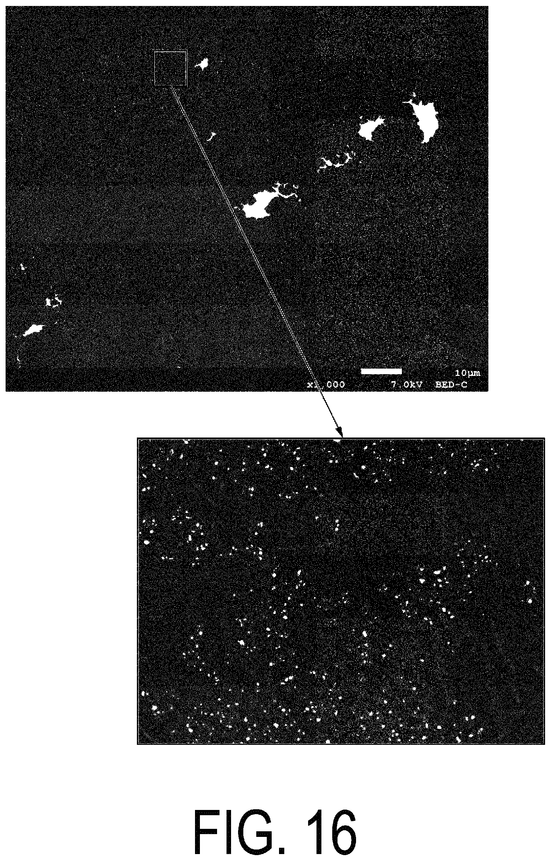

From the photograph of FIG. 13, no iron microparticle is confirmed at the iron powder before the start of the experiment. From the photograph of FIG. 14, it is confirmed that in the second stage of the reaction, fine iron particles on the order of submicron started to be formed on surfaces of particles on the order of micron. From the photograph of FIG. 15, it is confirmed that in the third stage of the reaction, particles on the order of micron decreased and fine iron particles on the order of submicron increased around the remaining particles on the order of micron. From the photograph of FIG. 16, it is confirmed that in the fourth stage of the reaction, fine iron particles on the order of submicron to which carbon adhered were present around particles on the order of micron, and carbon having a scale-like shape was present around the fine iron particles. In this way, it is confirmed from the SEM photographs that the iron powder used as the catalyst was micronized with the progress of the reaction represented by the reaction formula (1).

Next, the state of such micronization of iron powder was quantitatively evaluated. Specifically, a particle size distribution of the iron powder was obtained before the start of the experiment, 5 hours after the start of the experiment (corresponding to the second stage of the reaction), 10 hours after the start of the experiment (corresponding to the third stage of the reaction), and 30 hours after the start of the experiment (corresponding to the fourth stage of the reaction), and the results thereof were evaluated. The particle size distribution was obtained by image analysis of the captured SEM photographs (FIGS. 13 to 16) in accordance with the steps (A) to (E) below.
(A) The catalyst was embedded in a resin, and a cross section was obtained with a cross section polisher.
(B) SEM observation of the cross section of (A) was performed, and a backscattered electron image of the catalyst was captured. In the backscattered electron image, images of signals of metal particles are obtained (white portions in the photograph).
(C) Binarization processing (inversion processing) of the obtained backscattered electron image was performed. As a result, portions corresponding to the metal particles were blackened.
(D) Black portions were extracted from the inverted image of (C), and area information for each particle was extracted. The analysis software used for this extraction operation is "ImageJ (https://ja.wikipedia.org/wiki/ImageJ)".
(E) Assuming a cross section of a true sphere, the particle size of each particle was calculated from the obtained area information.

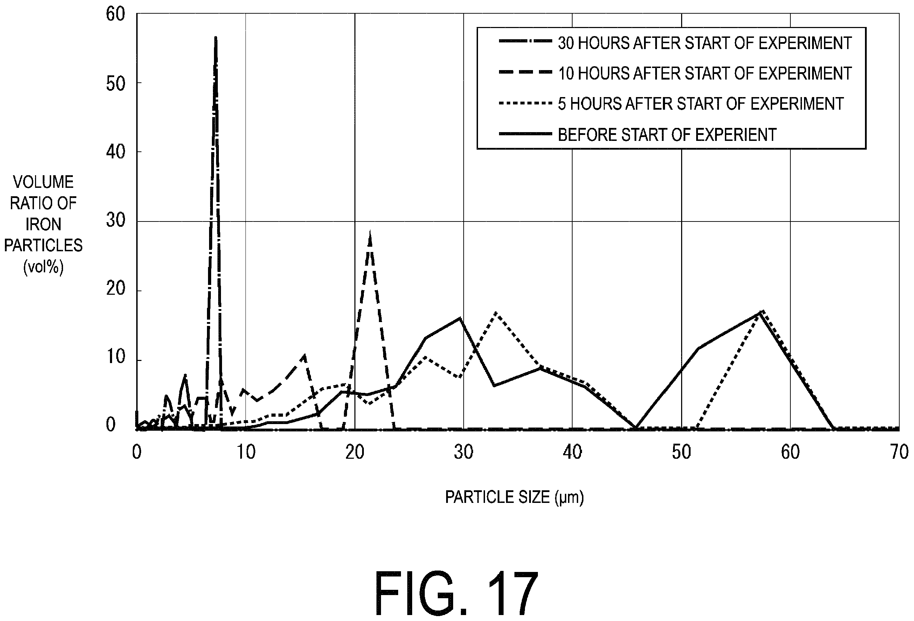

The particle size distributions obtained by the above-described steps (A) to (E) are shown in FIG. 17. While the peaks of the particle size distribution of the iron powder before the start of the experiment were several tens of µm, the peaks of particle sizes on the order of submicron rose as the experiment time elapsed. From these results, it is quantitatively confirmed that the iron powder used as the catalyst was micronized with the progress of the reaction represented by the reaction formula (1).

In addition, from the area information for each particle obtained in the above-described step (D), a volume ratio of particles on the order of submicron to the entire metal was calculated. The volume ratios at the respective stages of the reaction are shown in Table 3 below.

**[Table 3]**

| | Before start of experiment | Second stage | Third stage | Fourth stage |
|---|---|---|---|---|
| Volume ratio [%] | 0 | 0.1 | 6 | 15 |

From the fact that the volume ratio of particles on the order of submicron increased with the progress of the reaction after the start of the experiment through the second stage, the third stage, and the fourth stage, the state in which the iron powder used as the catalyst was micronized can be quantitatively confirmed.

Area information of metal and carbon was extracted from the backscattered electron image obtained in the step (B) or the binarized backscattered electron image obtained in the step (C), and the content ratio of the metal in the catalyst (= (volume of the metal)/((volume of the metal) + (volume of the carbon)) × 100) was calculated for each stage of the reaction. The results thereof are shown in Table 4 below.

**[Table 4]**

| | Before start of experiment | Second stage | Third stage | Fourth stage |
|---|---|---|---|---|
| Metal content ratio [%] | 100 | 22 | 3 | 1 |

As described in the description of the reaction mechanism of the reaction represented by the reaction formula (1), as the decomposition of a hydrocarbon gas in the metal catalyst progresses, hydrogen is generated and carbon is accumulated on the catalyst. Accordingly, as shown in FIG. 12, the change over time of the methane conversion rate in each of Examples 2 to 4 transitions so as to increase while decreasing the content ratio of the metal in the catalyst or while increasing the content ratio of the carbon in the catalyst and decrease after reaching a peak. The metal exhibits catalytic activity in a state of being complexed with carbon, and it is considered that this state contributes to improvement of the catalytic activity.

### Examples 5 to 7

From the experimental results of Examples 2 to 4, it was confirmed that a reaction of decomposing methane into hydrogen and carbon was caused by bringing the methane into contact with the iron powder at a temperature of 750°C to 900°C, the iron powder was micronized by the reaction, and fine iron particles on the order of submicron were produced. Next, experiments of Examples 5 to 7 were performed at a reaction temperature of less than 750°C. The respective experimental conditions for Examples 5 to 7 are summarized in Table 5 below. The conditions for Examples 5 to 7 are the same as the conditions for Examples 2 to 4 except for the reaction temperature, and the catalyst used in Examples 5 to 7 is the same as the catalyst used in Examples 1 to 4.

**[Table 5]**

| Example | 5 | 6 | 7 |
|---|---|---|---|
| Reaction temperature (°C) | 700 | 650 | 600 |

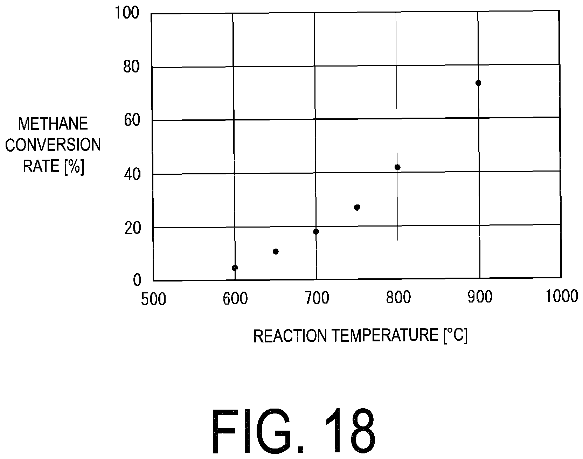

In Examples 2 to 4, the methane conversion rate exhibited a behavior of increasing after the start of the experiment and decreasing after the methane conversion rate reached a peak. Although the change over time of the methane conversion rates of Examples 5 to 7 are not shown, Examples 5 to 7 also exhibited the same behavior. That is, a peak value of the methane conversion rate was present in each of Examples 2 to 7. FIG. 18 shows a relationship between reaction temperature and peak value of the methane conversion rate in Examples 2 to 7.

According to FIG. 18, it was found that, at a reaction temperature of 600°C to 900°C, the lower the reaction temperature was, the lower the peak value of the methane conversion rate was. However, even when the reaction temperature was 600°C, the peak value of the methane conversion rate was maintained at about 5%. Since it was found from Examples 1 to 4 that when iron powder is used as a catalyst, the activity of the reaction represented by the reaction formula (1) is maintained for a considerably long time, the activity of the reaction represented by the reaction formula (1) is supposed to be maintained for a long time also in Examples 5 to 7. Then, it is considered that even when the peak values of the methane conversion rates in Examples 5 to 7 are about 5% to less than 20%, the reaction represented by the reaction formula (1) continues for a long time, and thus the iron powder used as a catalyst of the reaction is micronized to produce fine iron particles on the order of submicron. Therefore, it is considered that a reaction of decomposing methane into hydrogen and carbon is caused by bringing the methane into contact with the iron powder at a temperature of 600°C to 900°C, and the iron powder is micronized by the reaction to produce fine iron particles on the order of submicron.

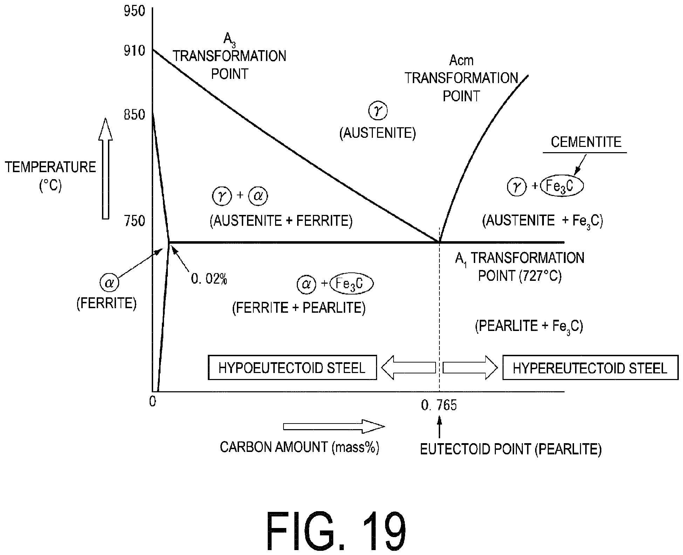

FIG. 19 illustrates a metallographic phase diagram of a carbon steel in an equilibrium state (reference source:
https://www.monotaro.com/s/pages/readingseries/kikaibuhinhyomensyori_0105 /). According to this, an iron phase changes to γ-Fe (austenite) at 727°C or higher. Therefore, it is considered that during the reaction represented by the reaction formula (1), iron in the catalyst is in an austenite state, and thus the iron reacts with methane in a feed gas to form iron carbides, and the iron carbides serve as active sites to develop new active sites. From a theoretical consideration based on such a metallographic phase diagram, it can be understood that when the reaction temperature is 727°C or higher, the iron powder is micronized to produce fine iron particles on the order of submicron.

### Examples 8 to 11

Next, experiments of Examples 8 to 11 using different partial pressures of methane were performed by using the experimental apparatus 20 illustrated in FIG. 2. The respective experimental conditions for Examples 8 to 11 are summarized in Table 6 below. The reaction temperature, the amount of catalyst, the height of catalyst layer, the flow rate of feed gas, and the space velocity for Examples 8 to 11 are the same as those for Examples 2 to 4, and the catalyst used in Examples 8 to 11 is the same as the catalyst used in Examples 1 to 7.

**[Table 6]**

| Example | 8 | 9 | 10 | 11 |
|---|---|---|---|---|
| Partial pressure of methane (MPa) | 0.025 | 0.05 | 0.075 | 0.1 |
| Composition of feed gas | (a) 25 vol% | (a) 50 vol% | (a) 75 vol% | (a) 100 vol% |
| (a) Methane | (b) 75 vol% | (b) 50 vol% | (b) 25 vol% | (b) 0 vol% |
| (b) Argon | | | | |

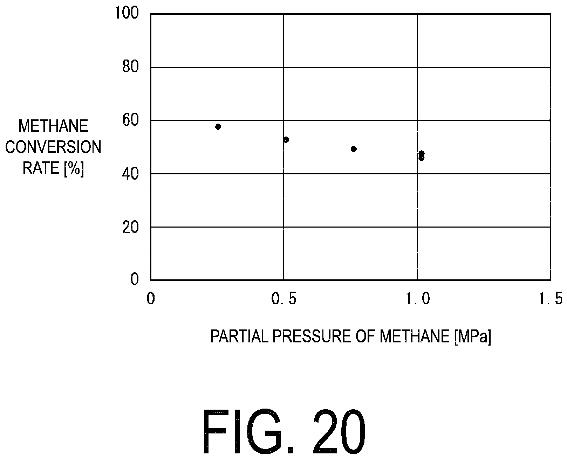

FIG. 20 shows a relationship between partial pressure of methane and peak value of methane conversion rate in Examples 8 to 11. According to FIG. 20, it was found that, at a partial pressure of methane of 0.025 MPa to 0.1 MPa, a peak value of the methane conversion rate gradually decreases as the partial pressure of methane increases. However, since the peak value of the methane conversion rate is a little less than 60% when the partial pressure of methane is 0.025 MPa and the peak value of the methane conversion rate is a little less than 50% when the partial pressure of methane is 0.1 MPa, it can be said that the influence of the partial pressure of methane on the peak value of the methane conversion rate is small when the partial pressure of methane is within the above-described range. Since it was found from Examples 1 to 4 that when iron powder is used as a catalyst, the activity of the reaction represented by the reaction formula (1) is maintained for a considerably long time, the activity of the reaction represented by the reaction formula (1) is supposed to be maintained for a long time also in Examples 8 to 11. Then, it is considered that the iron powder used as a catalyst of the reaction is micronized to produce fine iron particles on the order of submicron. Therefore, it is considered that a reaction of decomposing methane into hydrogen and carbon is caused by bringing the methane into contact with the iron powder at a temperature of 600°C to 900°C when the partial pressure of methane is from 0.025 MPa to 0.1 MPa, and the iron powder is micronized by the reaction to produce fine iron particles on the order of submicron.

### Examples 12 to 15

Next, experiments of Examples 12 to 15 using catalysts (iron particles) having different particle sizes were performed using the experimental apparatus 20 illustrated in FIG. 2. The respective experimental conditions (including particle sizes of catalysts) for Examples 12 to 15 are summarized in Table 7 below. The amount of catalyst, the height of catalyst layer, the flow rate of feed gas, and the space velocity for Examples 12 to 15 are the same as those for Examples 2 to 4.

**[Table 7]**

| Example | 12 | 13 | 14 | 15 |
|---|---|---|---|---|
| Reaction temperature (°C) | 800 | 800 | 900 | 900 |
| Particle size of catalyst (mm) | 0.04 to 0.15 | 2 to 3 | 0.005 to 0.01 | 0.002 to 0.005 |
| Composition of feed gas | Methane: 100 vol% | | | |

The catalyst for Example 12 is iron powder available from Kojundo Chemical Laboratory Co., Ltd., and the iron powder having a particle size in the range of 0.04 to 0.15 mm was selected by a sieve and used. The catalyst for Example 13 is iron particles available from Kojundo Chemical Laboratory Co., Ltd., and the iron particles having a particle size in the range of 2 to 3 mm was selected by a sieve and used. The respective catalysts for Examples 14 and 15 are carbonyl iron powders available from Kojundo Chemical Laboratory Co., Ltd.

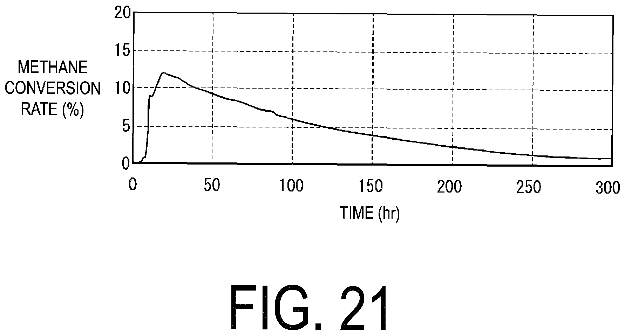

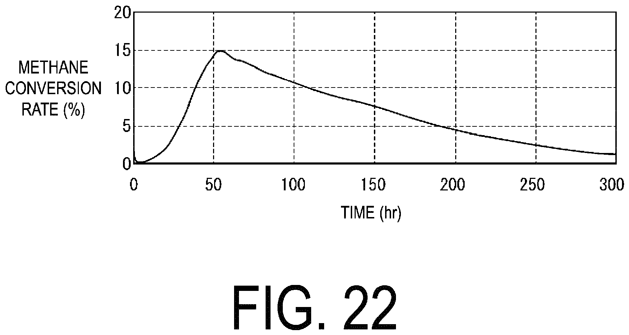

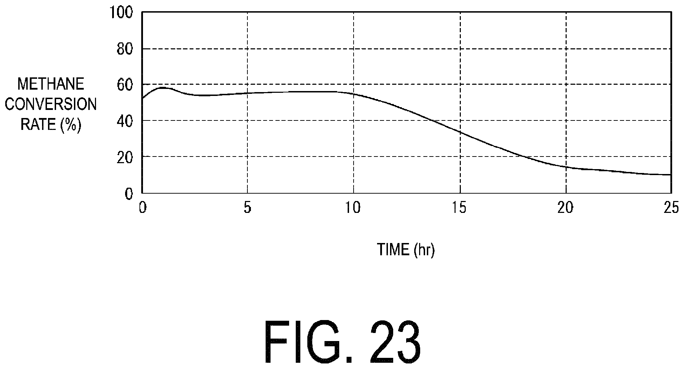

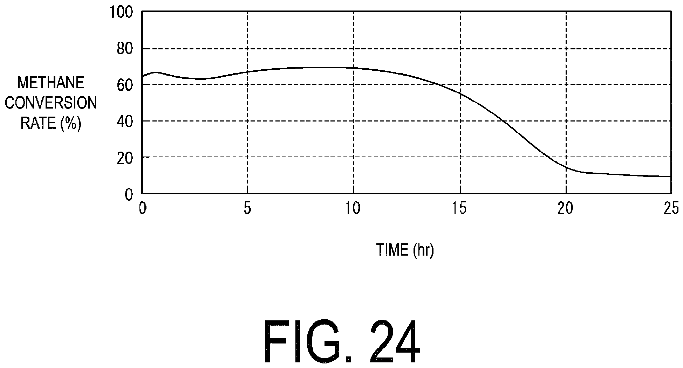

The experimental results of Examples 12 to 15 are shown in FIG. 21 to 24, respectively. In each of Examples 12 to 15, the maximum value of the methane conversion rate did not reach substantially 90% unlike Example 1, and the methane conversion rate exhibited a behavior of gradually increasing, reaching the maximum value, and then gradually decreasing although the timing was different between respective Examples. As shown in FIG. 21, in Example 12, the methane conversion rate reached the maximum value about 18 hours after the start of the experiment, and as shown in FIG. 22, in Example 13, the methane conversion rate reached the maximum value about 51 hours after the start of the experiment. In Examples 14 and 15, the methane conversion rate reached the maximum value about 1 hour after the start of the experiment as shown in FIGS. 23 and 24, respectively.

As described above, it was found that the activity of the reaction represented by the reaction formula (1) was maintained for a considerably long time in Examples 12 to 15 as in Example 1. Therefore, when the experimental results of Examples 12 to 15 are combined with the experimental results of Examples 1 to 4, it is considered that when the particle size of the iron particles used as the catalyst is in the range of 2 µm to 3 mm, the iron particles are micronized to produce fine iron particles on the order of submicron as in Example 1.

### Example 16

Next, an experiment of Example 16 using nickel particles as a catalyst was performed by using the experimental apparatus 20 illustrated in FIG. 2. The experimental conditions for Example 16 are the same as the experimental conditions for Example 3. The nickel particles are available from The Nilaco Corporation and the particle size thereof is in the range of 2 to 40 µm.

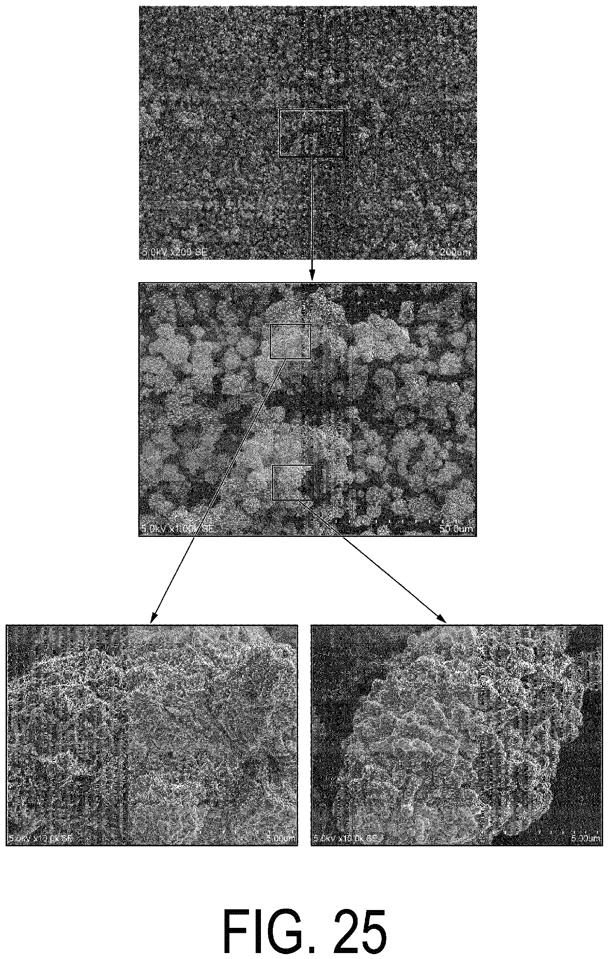

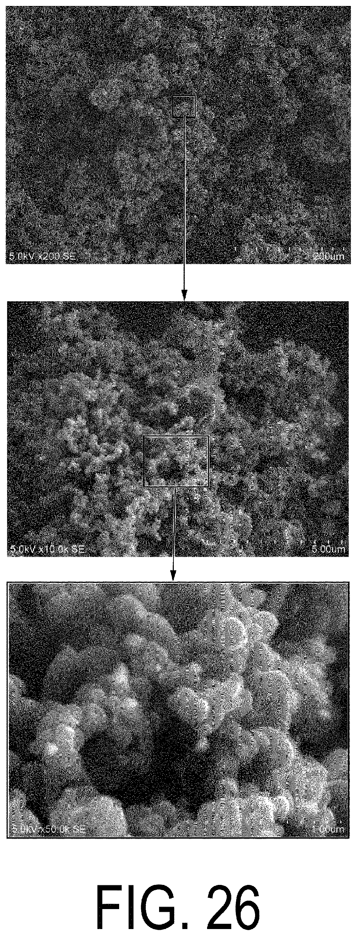

FIG. 25 shows photographs of surface images of the nickel particles taken by a scanning electron microscope before the start of the experiment, and FIG. 26 shows photographs of surface images of the nickel particles taken by a scanning electron microscope 50 hours after the start of the experiment. While the particle size of the nickel particles before the start of the experiment was at a level of several µm, the particle size of the nickel particles became several nm to several tens of nm 50 hours after the start of the experiment. Thus, it was found that the method of the present disclosure can be applied to not only iron but also nickel to micronize nickel. Since iron and nickel can be micronized by applying the method of the present disclosure, the inventors of the present disclosure consider that cobalt can also be micronized by applying the method of the present disclosure for the reason below, although no experiment for this has been performed. When metals are classified from the viewpoint of catalysis on the thermal decomposition of hydrocarbon compounds, it is known that, for example, titanium, zirconium, and tantalum belong to a group forming stable carbides, copper, silver, gold, platinum, and palladium belong to a group having no activity because a stable carbon-metal bond cannot be expected, and iron, nickel, and cobalt belong to a group having high activity. From this, the inventors of the present disclosure consider that the method of the present disclosure can also be applied to cobalt to micronize the cobalt. In addition, the inventors of the present disclosure consider that not only iron, nickel, and cobalt as a single component, but also an alloy of at least two of iron, nickel, or cobalt can be micronized by applying the method of the present disclosure.

### Example 17

Next, an experiment of Example 17 using iron particles subjected to hydrogen treatment and an experiment of Comparative Example 3 using iron particles not subjected to hydrogen treatment were performed by using the experimental apparatus 20 illustrated in FIG. 2. The iron particles used in Example 17 and Comparative Example 3 are electrolytic iron that is available from The Nilaco Corporation and has an iron purity of 99 mass% and an average particle size of 45 µm. The hydrogen treatment in Example 17 was performed by supplying a gas of 20 vol% hydrogen and 80 vol% argon at 800°C to the iron particles at a space velocity of 6000 (h⁻¹) for 2 hours. The conditions for the subsequent experiment (micronization experiment) are the same as the conditions for Example 3.

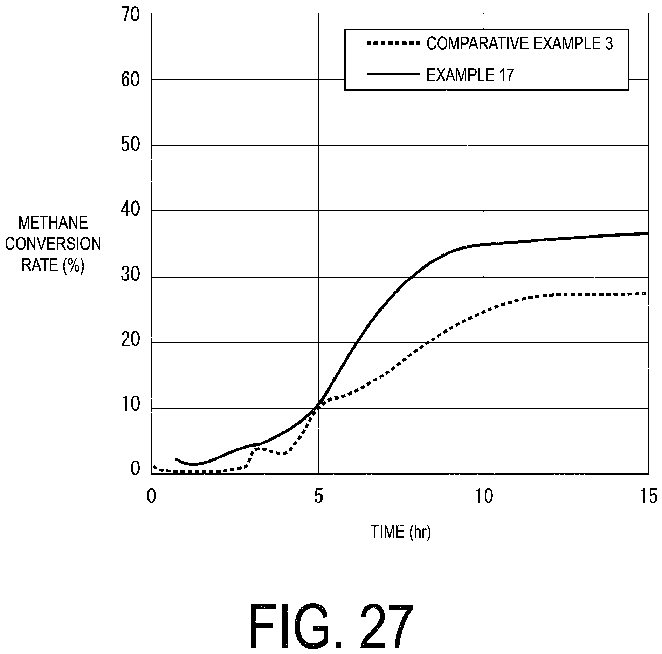

FIG. 27 shows the respective experimental results of Example 17 and Comparative Example 3, that is, the transitions of the methane conversion rates thereof. The methane conversion rate in Example 17 using the iron particles subjected to the hydrogen treatment is higher than the methane conversion rate in Comparative Example 3 using the iron particles not subjected to the hydrogen treatment. From this, it is expected that the hydrogen treatment promotes the micronization of iron, that is, the micronization of metal. The inventors of the present disclosure consider that when hydrogen is supplied to metal particles, grain boundaries are generated in the metal particles due to hydrogen attack, and microparticles of iron move from catalyst particles by migration starting from the grain boundaries, whereby the progress of the micronization of metal is promoted.

### Examples 18 and 19

Next, experiments of Examples 18 and 19 using iron particles subjected to carbon monoxide treatment and an experiment of Comparative Example 4 using iron particles not subjected to carbon monoxide treatment were performed by using the experimental apparatus 20 illustrated in FIG. 2. The iron particles used in Examples 18 and 19 and Comparative Example 4 are electrolytic iron that is available from The Nilaco Corporation and has an iron purity of 99 mass% and an average particle size of 36 µm. In Example 18, hydrogen treatment was also performed after the carbon monoxide treatment. In Example 19, only the carbon monoxide treatment was performed. The conditions for the carbon monoxide treatment for Examples 18 and 19, the conditions for the hydrogen treatment for Example 18, and the conditions for micronization experiments for Examples 18 and 19 and Comparative Example 4 are summarized in Table 8 below.

**[Table 8]**

| Treatment/Experiment | Conditions | Example | | Comparative Example |
|---|---|---|---|---|
| | | 18 | 19 | 4 |
| Carbon monoxide treatment | Temperature (°C) | 600 | 600 | - |
| | Space velocity (h⁻¹) | 10000 | 10000 | - |
| | Time [h] | 4 | 4 | - |
| | Composition of gas | CO: 10 vol% | | - |
| | | Ar: 90 vol% | | |
| Hydrogen treatment | Temperature (°C) | 800 | - | - |
| | Space velocity (h⁻¹) | 10000 | - | - |
| | Time [h] | 20 | - | - |
| | Composition of gas | H₂: 10 vol% | - | - |
| | | Ar: 90 vol% | | |
| Micronization experiment | Temperature (°C) | 800 | 800 | 800 |
| | Space velocity (h⁻¹) | 10000 | 10000 | 10000 |
| | Time [h] | 15 | 15 | 15 |
| | Composition of gas | Methane: 100 vol% | | |

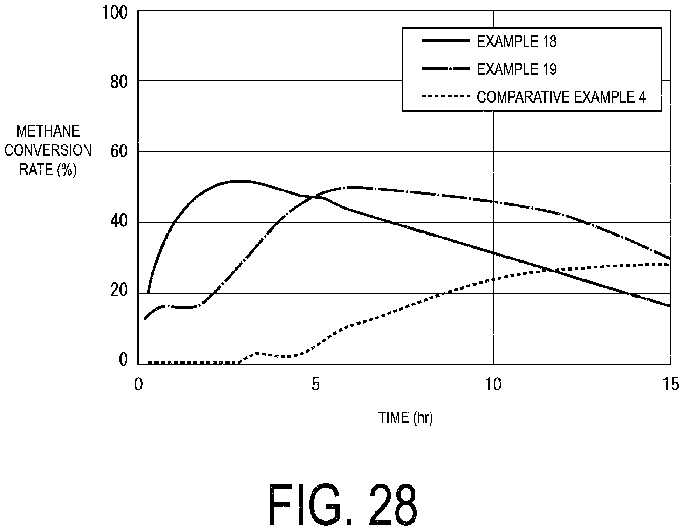

FIG. 28 shows the respective experimental results of Examples 18 and 19 and Comparative Example 4, that is, the transitions of the methane conversion rates thereof. It was found that in each of Examples 18 and 19, the degree of increase in the methane conversion rate after the start of the experiment was larger than that in Comparative Example 4. It was also found that the methane conversion rate of Example 18 was higher than that of Comparative Example 4 until about 12 hours after the start of the experiment, and the methane conversion rate of Example 19 was higher than that of Comparative Example 4 until about 15 hours after the start of the experiment. From this, it is expected that the carbon monoxide treatment promotes the micronization of iron, that is, the micronization of metal. The inventors of the present disclosure consider that when carbon monoxide is supplied to metal particles, carbon is deposited by a reaction of converting the carbon monoxide into carbon and carbon dioxide on the surfaces of the metal particles, whereby the progress of the micronization of metal is promoted.

The contents described in the above embodiments is understood as follows, for example.
[1] A production method for fine metal particles according to an aspect includes a step of preparing metal particles (2) and a step of supplying a feed gas containing a hydrocarbon to the metal particles (2), and in the production method, a contact between the feed gas and the metal particles (2) is carried out at a temperature of 600°C to 900°C.
   According to the production method for fine metal particles of the present disclosure, the metal particles function as a catalyst for a reaction of directly decomposing hydrocarbon into carbon and hydrogen. In the course of this catalysis, grain boundaries are generated in the metal particles due to hydrogen attack by the generated hydrogen, and microparticles move from the metal particles by migration starting from the grain boundaries and react with the generated carbon to form metal carbides. Conversion to metal carbides proceeds in association with the hydrogen attack, and the metal is separated into microparticles having a particle size on the order of submicron. Thus, the metal can be micronized to a particle size on the order of submicron.
[2] A production method for fine metal particles according to another aspect is the production method for fine metal particles according to [1], further including a step of removing carbon adhering to micronized metal after the contact between the feed gas and the metal particles (2).
   According to such a production method, since the carbon adhering to the micronized metal is removed, pure fine metal particles containing no carbon can be obtained.
[3] A production method for fine metal particles according to still another aspect is the production method for fine metal particles according to [1] or [2], wherein metal forming the metal particles (2) is iron, nickel, or cobalt, or an alloy of at least two thereof.
   According to such a production method, fine metal particles made of iron, nickel, cobalt, or an alloy of at least two thereof can be obtained.
[4] A production method for fine metal particles according to still another aspect is the production method for fine metal particles according to any one of [1] to [3], wherein a particle size of the metal particles (2) is in a range of 2 µm to 3 mm.
   According to such a production method, most of the initial metal particles can be micronized to a particle size on the order of submicron.
[5] A production method for fine metal particles according to still another aspect is the production method for fine metal particles according to any one of [1] to [4], wherein a partial pressure of hydrocarbon in the feed gas is 0.025 MPa to 0.1 MPa.
   According to such a production method, since the activity of the reaction of directly decomposing hydrocarbon can be maintained for a long time, most of the initial metal particles can be micronized to a particle size on the order of submicron.
[6] A production method for fine metal particles according to still another aspect is the production method for fine metal particles according to any one of [1] to [5], further including a step of supplying at least one of carbon monoxide or hydrogen to the metal particles (2) before the step of supplying the feed gas to the metal particles (2).

When carbon monoxide is supplied to the metal particles, the carbon monoxide is converted into carbon and carbon dioxide on the surfaces of the metal particles. The carbon is deposited by this reaction, whereby the progress of the micronization of the metal is promoted. On the other hand, when hydrogen is supplied to metal particles, grain boundaries are generated in the metal particles due to hydrogen attack, and microparticles of the metal move from catalyst particles by migration starting from the grain boundaries, whereby the progress of the micronization of the metal is promoted.

### Reference Signs List

2 Metal particles

## Claims

1. A production method for fine metal particles comprising:
a step of preparing metal particles; and
a step of supplying a feed gas containing a hydrocarbon to the metal particles,
contact between the feed gas and the metal particles being carried out at a temperature of 600°C to 900°C.

2. The production method for fine metal particles according to claim 1, further comprising a step of removing carbon adhering to micronized metal after the contact between the feed gas and the metal particles.

3. The production method for fine metal particles according to claim 1 or 2, wherein metal forming the metal particles is iron, nickel, cobalt, or an alloy of at least two of iron, nickel, or cobalt.

4. The production method for fine metal particles according to any one of claims 1 to 3, wherein a particle size of the metal particles is in a range of 2 µm to 3 mm.

5. The production method for fine metal particles according to any one of claims 1 to 4, wherein a partial pressure of the hydrocarbon in the feed gas is 0.025 MPa to 0.1 MPa.

6. The production method for fine metal particles according to any one of claims 1 to 5, further comprising a step of supplying at least one of carbon monoxide or hydrogen to the metal particles before the step of supplying the feed gas to the metal particles.
